# EUROPEAN PATENT APPLICATION

(11) **EP 3 718 785 A1**
(43) Date of publication of application: **07.10.2020**
(21) Application number: 19166638.7
(22) Date of filing: 01.04.2019
(51) Int. Cl.: B60B 7/04, B60B 7/06, B60B 7/14

(54) **METHOD OF ASSEMBLING A WHEEL COVER TO A WHEEL, COVER MATRIX AND USE OF A COVER MATRIX**

(71) Applicant: Euro-Fitting Management NV, 1930 Zaventem (BE)
(72) Inventor: RODRIGUEZ, Jose, 36208 Vigo (ES)
(74) Representative: Brantsandpatents bvba

(57) **Abstract**

The current invention concerns a method of assembling a wheel cover to a wheel (1), thereby providing a covered wheel, comprising the steps of: providing a wheel (1) with a plurality of circumferentially spaced openings (22,23), providing at least one plastic insert (2), suitable as at least partial wheel cover, provided with a series of threaded connector receptacles (21), providing a cover matrix (3), having a shape corresponding roughly to the negative shape of the covered wheel, placing the plastic insert (2) onto the cover matrix (3) in a corresponding insert position, placing the wheel (1) onto the cover matrix (3) in a corresponding wheel position, so that the threaded receptacles (21) communicate with the circumferentially spaced openings (22, 23), and fastening the plastic insert (2) onto the wheel (1) by screwing bolts into the threaded receptacles (21). The present invention further concerns a cover matrix (3) and the use thereof.

## Description

### Technical field

The present invention relates generally to a vehicle wheel assembly, and more particularly to an assembly method for providing a wheel cover to a vehicle wheel. The wheel cover is provided as at least one plastic insert which is connected to the vehicle wheel using threaded fasteners.

### Background

Typical vehicle wheels generally comprise an annular member having a rim with a pair of spaced rimmed flanges for engaging the bead of the tire. The spider is fixed within the rim. The spider typically includes a plurality of spokes with interposed openings for aesthetic purposes and for venting air to the brakes. The spider also includes a plurality of lug stud holes at the center thereof for receiving lug studs protruding from the rotating hub. Lug nuts are threaded on the lug studs for securely clamping the wheel and tire to the rotating hub.

Wheels have been designed aesthetically to enhance the outer face design of the basic steel wheel. Various attempts have been made in the prior art to decorate or finish the wheel wall.

WO 1998/018 637 discloses a wheel assembly including an applique of sheet material adhered to a molded insert member of structural rigidity. The insert member is molded to change the depth and contour of the wheel face from the original steel wheel. The insert member is adhered and/or locked to the steel wheel. A downside of this method is the difficulty adhering the insert member and sheet material to the steel wheel.

US 5,368,370 discloses a vehicle wheel construction wherein a metal applique is adhered to a wheel. The applique is chrome plated to simulate a conventional electroplate chrome wheel assembly. A downside of this construction is the heavy weight of the metal applique. Increasing the weight of the wheels significantly is not desirable.

US 3,669,501 discloses a foam-in-place process while the cover or skin is clamped to the steel wheel. The cover may be chrome plated. The cover is vacuum formed with the foam. The vacuum forming allows limited shapes and contours to be formed. The foam acts as an adhesive which is merely a foam backed adhesive sheet, as is common in the art. The foam covers 100% of the surface area.

US 5,128,085 discloses a composite style wheel including a metallic wheel, wheel disk, and rim extending thereabout. Rubber inserts extend about the wheel disk adjacent the rim. Plastic overlays are secured to the disk and spaced thereabout by the inserts. A downside of these method is the difficulty of assembling the composite style wheels with foam and inserts. This requires operators, is time consuming and thus expensive.

The present invention aims to resolve at least some of the problems mentioned above.

The invention thereto aims to provide a clear method of additive assembly, wherein a wheel is provided with a decorate or finish quickly and efficiently, without negatively impacting the wheel characteristics.

### Summary of the invention

The present invention provides a method of assembling a wheel cover to a wheel, thereby providing a covered wheel, comprising the steps of :
- providing a wheel with a plurality of circumferentially spaced openings,
- providing at least one plastic insert, suitable as at least partial wheel cover, provided with a series of threaded connector receptacles,
- providing a cover matrix, having a shape corresponding roughly to the negative shape of the covered wheel,
- placing the plastic insert onto the cover matrix in a corresponding insert position,
- placing the wheel onto the cover matrix in a corresponding wheel position, so that the threaded receptacles communicate with the circumferentially spaced openings, and
- fastening the plastic insert onto the wheel by screwing bolts into the threaded receptacles.

By locking the assembly of the wheel onto a matrix which holds each of the parts in place before fastening the wheel cover to the wheel, the wheel can be assembled quicker and easily. Furthermore, the assembly is standardized allowing for tighter quality control. This is particularly desirable for fastening plastic inserts with threaded fasteners. Here the tightening torque of the threaded fasteners is particularly important to ensure the wheel cover is sufficiently tight, but does not damage the plastic inserts. The use of plastic inserts is desirable due to their low weight, low cost and ease of providing a wide range of shapes and colors which is beneficial for providing both decorative and functional wheel covers.

In a second aspect, the present invention provides for a cover matrix suitable for assembly of a wheel cover onto a wheel, comprising a base, on which a partial wheel mold is provided, wherein the partial wheel mold is shaped roughly as the negative of the wheel, the cover matrix further comprising a partial cover mold, wherein the partial cover mold is shaped roughly as the negative of the wheel cover.

The cover matrix is suitable for quickly and efficiently assembling the wheel cover to the wheel. This is advantageous as it allows assembly to be done more easily, minimizing risk of human error and allowing workers to work more efficiently and more ergonomically. It furthermore allows the assembly to be fully automated through the use of standard available fastening robots, thereby minimizing labor costs. and chance of human error.

In a third aspect, the invention relates to the use of a cover matrix according to the second aspect.

The cover matrix can not only be used to assemble the wheel cover and the wheel, it can also be used in further production steps as non-damaging, sturdy grip onto the wheel. This allows the wheel to be transported, moved and rotated, while providing easy access to the axle-side of the wheel and without gripping the metal or rubber wheel itself with a large gripper. This is advantageous as traditional molds tend to damage an aesthetic wheel cover.

### Description of figures

**Figure 1** shows a wheel provided with a wheel cover comprising five plastic inserts according to the present invention.
**Figure 2A** shows an exploded view of a cover matrix, a wheel cover and a wheel according to the present invention.
**Figure 2B** shows a cover matrix, a wheel cover comprising five plastic inserts in the corresponding insert positions and a wheel according to the present invention.
**Figure 3** shows a cover matrix according to the present invention.

### Detailed description of the invention

The present invention concerns a method of assembling a wheel cover to a wheel by using a cover matrix. The present invention further relates the cover matrix and the use thereof.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

In a first aspect, the present invention provides a method of assembling a wheel cover to a wheel, thereby providing a covered wheel, comprising the steps of :
- providing a wheel with a plurality of circumferentially spaced openings,
- providing at least one plastic insert, suitable as at least partial wheel cover, provided with a series of threaded connector receptacles,
- providing a cover matrix, having a shape corresponding roughly to the negative shape of the covered wheel,
- placing the plastic insert onto the cover matrix in a corresponding insert position,
- placing the wheel onto the cover matrix in a corresponding wheel position, so that the threaded receptacles communicate with the circumferentially spaced openings, and
- fastening the plastic insert onto the wheel by screwing bolts into the threaded receptacles.

The corresponding insert position is the position for the insert on the cover matrix. The corresponding wheel position is the position for the wheel on the cover matrix. The inserts need to be placed onto the cover matrix before the wheel is placed on both. If the inserts and the wheel are both in their corresponding position, their positions match as they should be when assembled. This allows connecting the inserts to the wheel by screwing bolts from the axle side of the wheel into the threaded receptacles of the plastic inserts.

A wheel cover according to the present invention is one or a series of elements, in the present invention comprising plastic inserts, which cover at least a part of the wheel. The part of the wheel that is to be covered herein is undefined. This can include ornamental spokes, a hubcap, a rim, parts or a combination thereof. A wheel cover according to the present invention does not necessarily include a hubcap. In a preferred embodiment, the wheel cover according to the present invention does not include a hubcap, as the hub cap is attached later once the wheel is attached to the vehicle axle. In a preferred embodiment, the wheel cover comprises a series of separate plastic inserts which cover or decorate at least a part of the spokes of the wheel.

In a preferred embodiment of the invention, a series of plastic inserts are provided. The use of a cover matrix allows fastening of several separate plastic inserts as wheel cover. This allows the plastic inserts to cover only the areas of the wheel which are required for aesthetic means. Minimizing the surrounding areas and allowing sufficient space in between plastic inserts improves the heat transfer from the wheel, which is advantageous for cooling the wheel while in use. Furthermore it minimizes material use and may be beneficial for achieving certain ornamental effects.

It is understood that the series of plastic inserts as wheel cover are typically ornamental. However, for certain purposes functional inserts can also be desired. These functional inserts improve the functioning of the wheel or vehicle in some way, for example improving aerodynamics or improving the cooling of the wheel. In a particular preferred embodiment, the plastic inserts improve the aerodynamics of the wheel. In a further preferred embodiment, the plastic inserts improve the airflow through the wheel to promote cooling.

It is clear that even ornamental inserts will have some effect on the functional properties of the vehicle wheel. It is a goal of the invention to minimize this effect, in order to not negatively affect the performance of the wheel in use. This is why plastic, lightweight inserts are used.

In a preferred embodiment, the plastic inserts are dyed to have a metallic look and shine. A metallic look or shine is often desired by consumers. However, metallic inserts are typically heavy, which has a negative impact on the performance of the wheel when used in a vehicle. Plastic inserts which look similar to metals are there for advantageous. Furthermore, plastic inserts are often cheaper than metals.

In a preferred embodiment, the cover matrix is shaped to guide the plastic insert into the corresponding position. This can for example be done by shaping the corresponding position of a plastic insert as the negative of this plastic insert.

In a preferred embodiment, the cover matrix is shaped to guide the wheel into the corresponding position. In a further preferred embodiment, the cover matrix is shaped so that the wheel will fall into place when placed and rotated on top of the cover matrix. The method then involves the step of placing the wheel on top of the cover matrix and the inserts in the corresponding insert position, followed by rotating the wheel on top of the cover matrix, until it falls in the corresponding wheel position. This provides for a standardized and reliable method of placing the wheel onto the cover matrix and fixing the plastic insert - wheel assembly. This allows the method to be performed by less skilled workers. In a further preferred embodiment, the reliability and simplicity of this preferred method allows for automatization utilizing standard robotics. This automation can furthermore be employed for different types of wheels and plastic inserts so long as different cover matrices are provided.

In a preferred embodiment, the bolts are screwed into the threaded receptacles with a tightening torque between 1 and 5 Nm, preferably the tightening torque is between 1.2 and 4 Nm, more preferably the tightening torque is between 1.4 and 3.5 Nm, more preferably the tightening torque is between 1.6 and 3 Nm, more preferably the tightening torque is between 1.8 and 2.8 Nm, most preferably the tightening torque is between 2.0 and 2.5 Nm. Threaded fasteners are common. However, threaded fasteners are generally avoided when attaching plastic inserts on top of a wheel. Due to the movements and vibrations of the wheel, threaded fasteners can untighten especially when they aren't sufficiently tight during assembly. Loose plastic inserts are dangerous especially if they detach from the wheel while the wheel is in motion. A tightening torque which is too tight, particularly for plastic inserts, will often produce microtears and -cracks within the molded plastic insert. The plastic inserts are then no longer sufficiently strong and durable to withstand the stress of the movement and vibration of the wheel. The same dangers then arise.

It is clear that a good control of the tightening torque is required. The matrix according to the present invention aids in assembling the plastic inserts on the wheel. It furthermore allows the operator to focus on the key aspects of the assembly, such as correctly fastening the bolts into the threaded receptacles, in order to guarantee correct assembly and thus safety for the consumer.

The matrix also easily allows the bolts to be screwed vertically, along with gravity. This is more ergonomic and easier for manual operators to perform. A further advantage is that this action can be performed by standard screwing robotics as available on the market. In a preferred embodiment, the fastening of the plastic insert onto the wheel by screwing bolts into the threaded receptacles is performed by a robot arm. This minimizes the chance of human error and minimizes the labor cost.

In a preferred embodiment, the installation torque is between 0.2 and 1.5 Nm, more preferably the installation torque is between 0.4 and 1.2, more preferably the installation torque is between 0.6 and 1.0, most preferably the installation torque is between 0.7 and 0.8 Nm. The installation torque is advantageously well below the final tightening force to ensure no damage occurs during installation. The installation torque is increased up to the final tightening torque once the installation torque no longer rotates the threaded bolt.

In a preferred embodiment the rotational speed of the threaded bolt when installed is between 100 and 600 rpm, more preferably the rotational speed of the threaded bolt when installed is between 150 and 500 rpm, most preferably the rotational speed of the threaded bolt when installed is between 200 and 400 rpm. The process has to prevent damage in the threaded bolt, the thread itself and the plastic insert while also preventing improper tightening.

In a preferred embodiment, each separate insert is fastened with 2-6 screws, preferably 2-5 screws, more preferably 2-4 screws, most preferably 2-3 screws. 2-3 screws was found to be the ideal optimum between providing sufficient fastening of the plastic insert onto the wheel without vastly increasing operational costs. Furthermore, a high number of screws was found to have a negative impact on the stress within some inserts, particularly if not all screws were fastened with the exact same finishing torque.

In a second aspect, the present invention provides for a cover matrix suitable for assembly of a wheel cover onto a wheel, comprising a base, on which a partial wheel mold is provided, wherein the partial wheel mold is shaped roughly as the negative of the wheel, the cover matrix further comprising a partial cover mold, wherein the partial cover mold is shaped roughly as the negative of the wheel cover.

The base, partial wheel mold and the partial cover mold are not necessarily separate parts. These can be made of one and the same material and thoroughly interconnected. Rather these are areas of the cover matrix with a clear purpose.

The base is preferably on one side, provided with attachment or grip elements allowing the cover matrix and any inserts and wheel upon to be moved easily. The partial wheel mold relates to the corresponding wheel position of the method. The partial wheel mold as well as the base furthermore supports the wheel. The partial cover mold relates to the corresponding insert position of the method. The partial cover mold supports the insert(s) which together make up the cover. The position of these molds support the wheel and inserts in the position in which the inserts are to be attached onto the wheel. This allows direct assembly of the wheel by screwing bolts from the axle side.

In a preferred embodiment, the base of the cover matrix is flat on the opposite side of the partial wheel mold and the partial cover mold. This allows the matrix, with or without inserts and / or wheel, to be placed onto any flat surface including a conveyer band.

In a preferred embodiment, the base of the cover matrix is provided in a sturdy plastic. This is beneficial as bending or transforming the wheel cover is not desired. This would dislocate the relative positions of the cover and the wheel if these are not connected. If they are connected, this would provide stress on the assembly.

In a preferred embodiment, the partial insert mold of the cover matrix is provided in a soft plastic. In a further preferred embodiment, the partial insert mold of the cover matrix has no sharp edges or ridges. In a preferred embodiment, the partial wheel mold of the cover matrix is provided in a soft plastic. In a further preferred embodiment, the partial wheel mold of the cover matrix has no sharp edges or ridges. In a preferred embodiment, the surface of the cover matrix is provided in a soft plastic. Each of these measures helps prevent damage to the wheel cover or the wheel when placing any elements onto the cover matrix, during assembly or during optional further processing steps. This allows the use of the cover matrix as grip onto the finished wheel-wheel cover assembly without risking damage to an ornamental wheel cover. Scratches or other damage on the surface, in particular for ornamental wheel covers are clearly not desired.

In a preferred embodiment, the base, the partial insert mold and the partial wheel mold are provided in different plastics. This allows the use of a sturdy, rigid base along with a soft and pliable surface, which combines the advantage of preventing damage to the cover while ensuring the wheel cover can reliably and correctly be assembled onto the wheel.

In a preferred embodiment, the base is further provided with connectors or attachment elements. These can be threaded, rings, manual handholds or any other type of elements suitable for holding and moving the cover matrix. Preferably these are suitable for moving the cover matrix with wheel thereon. This allows the use of the cover matrix to transport and grip on the finished wheel to and during further processing steps. This is in particular advantageous for automatization of further processing steps, as the wheel is provided in a standard, reliable position. It is furthermore possible to employ the same automatization using different cover matrices to process similar wheels with different wheel covers through different plastic insert finishes. As such various wheels and wheel covers can be processed in the same, optionally automated, processing stream. This is efficient and furthermore helps reduces the knowledge and skill required for each assembly and thus helps reduce errors.

In a preferred embodiment, the cover matrix is produced through 3D printing. In a more preferred embodiment, the various parts of the cover matrix are produced by fused deposition modeling (FDM) also known under fused filament fabrication (FFF). This is a 3D printing process that uses a continuous filament of a thermoplastic material. Filament is fed from a large coil through a moving, heated printer extruder head, and is deposited on the growing work. The print head is moved under computer control to define the printed shape. Usually the head moves in two dimensions to deposit one horizontal plane, or layer, at a time; the work or the print head is then moved vertically by a small amount to begin a new layer. FDM allows for cheaply and efficiently producing various cover matrices for various plastic inserts and wheel configurations. Furthermore, FDM allows different parts to be created from different materials by using different filaments. These different parts can then be connected through traditional mechanical means such as fasteners, or chemical means such as gluing or welding.

In a preferred embodiment, provided that the cover matrix shows rotational symmetry, the cover matrix can be assembled from various separate but identical parts. This is advantageous as it allows production of several identical parts, which decreases production costs. Furthermore it allows storage space and transport costs of cover matrixes to be reduced if the cover matrix parts can be assembled and disassembled. Wheels and wheel covers frequently show rotational symmetry, allowing this advantageous embodiment to be employed frequently.

In a third aspect, the invention relates to the use of a cover matrix according to the second aspect.

The cover matrix according to the second aspect of the invention can not only to be used to assemble the wheel cover on the wheel, it can further be used in further processing steps to handle the assembled wheel with wheel cover. As the ornamental wheel cover has already been supplied onto the wheel, further processing in this stage is more delicate as placing the wheel onto a flat surface will lead to scratching and damage which is clearly undesirable. However, keeping the wheel upright allows for rotations and additionally is difficult to handle both in manual and automatic processes. The cover matrix thus provides for a means to handle the wheel with wheel cover easily during further processing and transport, without risk of damage.

The cover matrix also ensures the wheel is consistently oriented in the same way. As such, it makes the automatization of further processing easier, as for example nut bolts will be in the same predictable position each time. Through well-chosen cover matrix design, the process can handle different wheels and / or identical wheels with different wheel covers without any changes in the processing. This is particularly advantageous for automatization or eliminating human error.

The cover matrix is considerably smaller than grips which grip onto a wheel entirely. Furthermore it allows easy access to all sides and surfaces of the wheel except the side of the wheel cover.

In a preferred embodiment, the cover matrix according to the second aspect of the invention is at least used for an assembly method according to the first aspect of the invention.

The invention is further described by the following non-limiting examples which further illustrate the invention, and are not intended to, nor should they be interpreted to, limit the scope of the invention.

The present invention will be now described in more details, referring to examples that are not limitative.

### Exam pies

### Example 1 : Wheel with ornamental plastic inserts

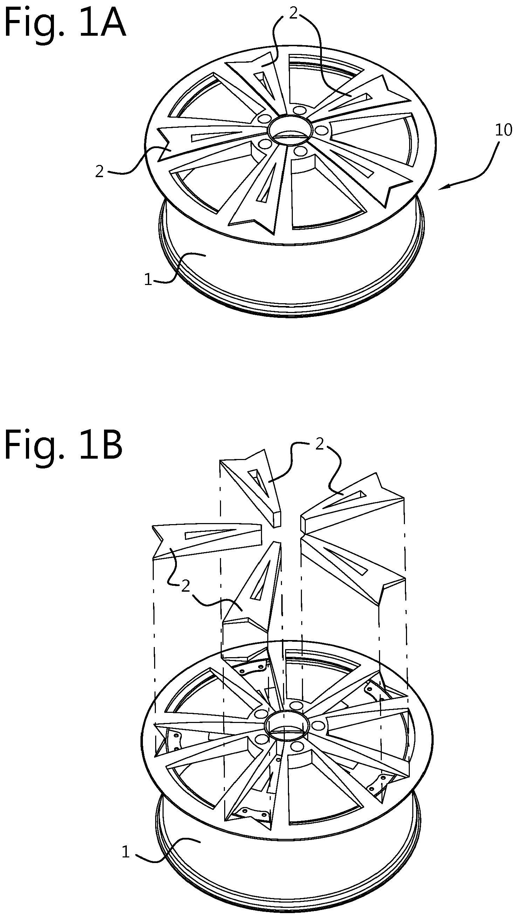

Figure 1 shows a wheel 1 which is finished with ornamental plastic inserts 2 according to the present invention. The wheel cover thus comprises five identical plastic inserts, and has an ornamental function. These inserts have a metallic color, with a different hue than the wheel itself. This different hue provides the wheel with a color variation, which looks aesthetic. The metallic color ensures that the plastic inserts don't look out of place, yet look qualitatively strong. By providing these inserts in plastic, a significant amount of weight and material cost is saved over metallic inserts.

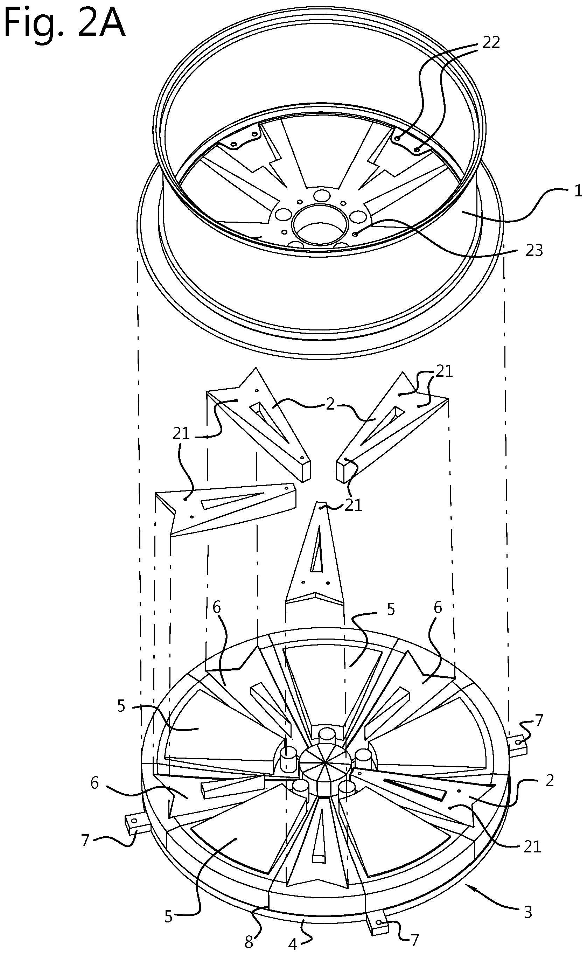

The inserts are produced through injection molding and provided with three threaded receptacles 21 as shown in figure 2A.

### Example 2 : Cover matrix

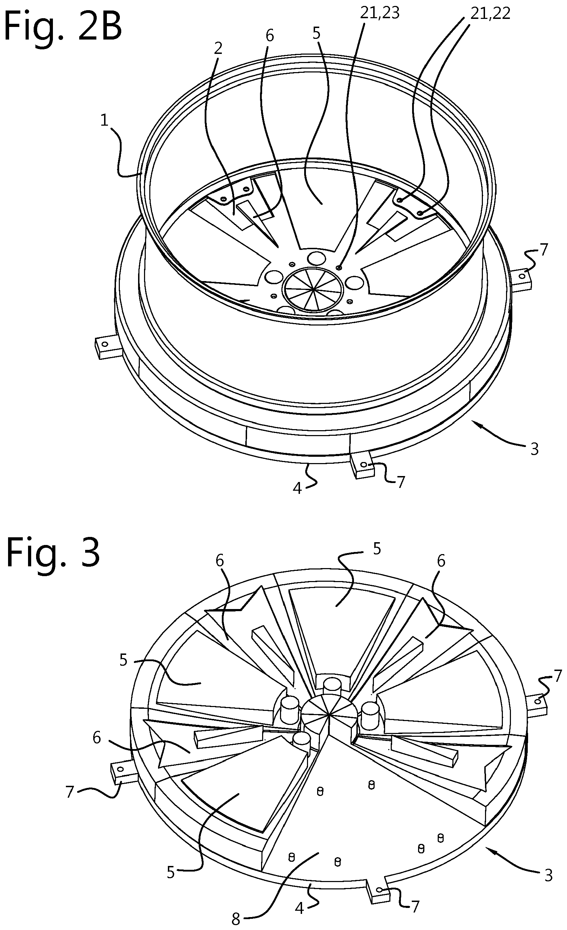

Figure 3 shows a cover matrix 3 for the wheel 1 and plastic insert 2 combination of example 1. This cover matrix comprises a base 4 provided with five partial wheel molds 5 and five partial insert molds 6. The base 4 is produced from a sturdy material, while the partial wheel molds 5 and partial insert molds 6 are produced from a soft thermoplastic. The entire cover matrix is produced by FDM.

The partial insert molds 6 and the partial wheel molds 5 are separate elements which can be attached to the base reversibly. This allows these parts to be used as exchangeable elements. For assembling a certain wheel with different inserts, different partial insert molds 6 can be applied onto the base. Likewise, for assembling similar inserts to a different wheel other partial wheel molds 5 can be employed. This second case is typically restricted to wheels of roughly the same size.

### Example 3 : Assembly method of the plastic inserts onto the wheel

Figure 2A shows a cover matrix 3, where five plastic inserts 2 can be placed face-down into each of the five partial insert molds 6. On top of those five plastic inserts 2 the wheel 1 can be placed. By turning the wheel a small amount, it falls into its corresponding wheel position due to the shape of the partial wheel molds 5. The wheel in its corresponding wheel position is shown in figure 2B.

Figure 2B shows the alignment of the openings for threaded fasteners in the wheel 22, 23 and the threaded receptacles 21. The inserts and the wheel are both held steady and in their respective positions by the cover matrix. In particular, the wheel is held in place by the partial wheel mold 5, and the inserts are each held in their corresponding insert position by the partial insert molds 6. The five plastic inserts 2 are now connected to the wheel by screwing a bolt through openings 22, 23, into each of the threaded receptacles 21. The bolts are screwed at 300 rpm, with an installation torque of 0.75 Nm, which is increased to an finishing torque of 2 Nm. The wheel and wheel cover assembly is left in the wheel matrix throughout the further processing steps, including assembling a tire on said wheel.

## Claims

1. A method of assembling a wheel cover to a wheel, thereby providing a covered wheel, comprising the steps of :
- providing a wheel with a plurality of circumferentially spaced openings,
- providing at least one plastic insert, suitable as at least partial wheel cover, provided with a series of threaded connector receptacles,
- providing a cover matrix, having a shape corresponding roughly to the negative shape of the covered wheel,
- placing the plastic insert onto the cover matrix in a corresponding insert position,
- placing the wheel onto the cover matrix in a corresponding wheel position, so that the threaded receptacles communicate with the circumferentially spaced openings, and
- fastening the plastic insert onto the wheel by screwing bolts into the threaded receptacles.

2. Method according to claim 1, wherein a series of separate plastic inserts are provided.

3. Method according to claims 1-2, wherein the plastic inserts are ornamental.

4. Method according to claims 1-3, wherein the plastic inserts improve the aerodynamic properties of the wheel.

5. Method according to claims 1-4, wherein the cover matrix is shaped to guide the plastic insert into the corresponding insert position.

6. Method according to claims 1-5, wherein the cover matrix is shaped to guide the wheel into the corresponding wheel position.

7. Method according to claims 1-7, wherein the cover matrix is shaped to guide the wheel into the corresponding wheel position, wherein placing the wheel onto the cover matrix in a corresponding wheel position comprises the step of :
- rotating the wheel on top of the cover matrix, thereby placing the wheel in the corresponding wheel position.

8. Method according to claims 1-8, wherein the bolts are screwed into the threaded receptacles with a tightening torque between 1 to 5 Nm.

9. Cover matrix suitable for assembly of a wheel cover onto a wheel, comprising a base, on which a partial wheel mold is provided, wherein the partial wheel mold is shaped roughly as the negative of the wheel, the cover matrix further comprising a partial cover mold, wherein the partial cover mold is shaped roughly as the negative of the wheel cover.

10. Cover matrix according to claim 9, wherein the partial wheel mold is made of a soft plastic.

11. Cover matrix according to claim 9-10, wherein the partial insert mold is made of a soft plastic.

12. Cover matrix according to claim 9-11, wherein the base is made of a sturdy, durable plastic.

13. Cover matrix according to claim 9-12, wherein cover matrix further comprises connectors, preferably attached to the base.

14. Use of a cover matrix according to any of claims 9-13.

15. Use of a cover matrix according to any of claims 9-13 in an assembly process according to claim 1-8.
